# FASCICULE DE BREVET EUROPEEN

(11) **EP 2 237 942 B1**
(45) Date de publication et mention de la délivrance du brevet: **20.06.2012**
(21) Numéro de dépôt: 09707385.2
(22) Date de dépôt: 27.01.2009
(51) Int. Cl.: B29C 65/70, B29C 65/42, B29C 45/14, B29C 70/84, B32B 3/12

(54) **METHODE DE REALISATION D'UNE STRUCTURE ALVEOLAIRE**
VERFAHREN ZUR HERSTELLUNG EINER ZELLSTRUKTUR
METHOD FOR MAKING A CELLULAR STRUCTURE

(30) Priorité: 06.02.2008 FR 0800622
(43) Date de publication de la demande: 13.10.2010
(73) Titulaire: Renault s.a.s., 92100 Boulogne-Billancourt (FR)
(72) Inventeur: JOUAULT, Jacques, F-78180 Montigny Le Bretonneux (FR)
(74) Mandataire: Rougemont, Bernard
(86) Numéro de dépôt international: PCT/FR2009/050114
(87) Numéro de publication internationale: WO 2009/098423

(56) Documents cités:
- EP-A- 1 369 599
- FR-A- 2 395 823
- FR-A- 2 399 915

## Description

La présente invention se rapporte à une méthode de réalisation d'une structure alvéolaire dont les caractéristiques sont améliorées pour permettre une utilisation plus large de ces structures alvéolaires.

Ces structures alvéolaires sont notamment destinées aux véhicules automobiles et on désire le plus souvent, renforcer la rigidité de ces structures.

Des structures alvéolaires connues comprennent un panneau alvéolaire constitué d'une âme en nid d'abeille et d'au moins deux plaques de recouvrement la prenant en sandwich. Cette âme en nid d'abeille est constituée d'alvéoles orientées sensiblement perpendiculairement aux plaques de recouvrement auxquelles elles sont généralement collées de manière à obtenir un panneau alvéolaire d'une grande rigidité par rapport à la quantité de matériau utilisé. Ces panneaux alvéolaires connus doivent être installés et reliés entre eux notamment, aussi, il est usuellement prévu des zones de liaison. Dans ces zones de liaison on vient par exemple placer un insert dans l'épaisseur du panneau alvéolaire, lequel insert permettra d'introduire par exemple un tenon solidaire d'un autre panneau alvéolaire de manière à former la structure alvéolaire. Le tenon peut également prendre la forme d'une vis et coopérer avec l'insert qui est taraudé de manière à pouvoir accrocher le panneau alvéolaire à toute autre structure.

On pourra se référer au document FR 2 399 915 dans lequel il est décrit un procédé permettant de placer cet insert et selon lequel, on garnit, dans la zone de liaison choisie, les alvéoles d'une masse de matière plastique dans laquelle on vient ensuite ancrer ledit insert. Cette masse de matière plastique est soit insérée comme un bouchon dans l'épaisseur du panneau alvéolaire après avoir découpé quelques alvéoles de l'âme en nid d'abeille et avant d'avoir monté la plaque de recouvrement, ou alors les alvéoles dans la zone de liaison choisie, sont garnies d'une masse de polymère thermoplastique qui se ramollie sous l'effet d'un outil à ultrasons et grâce auquel on peut ensuite introduire ledit insert. La masse de polymère thermoplastique se refroidit ensuite et emprisonne l'insert qui est finalement ancré dans l'épaisseur du panneau alvéolaire.

Un inconvénient du procédé précité, réside notamment en ce qu'il comprend un certain nombre d'opérations manuelles difficilement automatisables, ce qui rend plus coûteux la réalisation de ces structures alvéolaires. Un autre inconvénient, est lié à la résistance de cette zone de liaison à la déformation et à l'arrachement. Un autre inconvénient encore est que la zone de liaison, tant dans sa position que dans ses dimensions, doit être prévue préalablement à la confection du panneau alvéolaire. < A >

Aussi, un problème qui se pose et que vise à résoudre la présente invention est de fournier une méthode de réalisation d'une structure alvéolaire qui soit plus économique, et aussi qui permettent d'obtenir une structure alvéolaire plus résistante.

Dans le but de résoudre ce problème, et selon un premier aspect, la présente invention propose une méthode de réalisation d'une structure alvéolaire comprenant un panneau alvéolaires et un élément complémentaire solidaire dudit panneau alvéolaire, ledit panneau alvéolaire comprenant une âme en nid d'abeille, ladite âme en nid d'abeille étant prise en sandwich entre deux plaques de recouvrement, ladite âme en nid d'abeille présentant des alvéoles orientées sensiblement perpendiculairement auxdites plaques de recouvrement, ladite méthode étant du type selon laquelle : on choisi une zone de liaison dudit panneau alvéolaires pour solidariser ledit élément complémentaire audit panneau alvéolaire dans ladite zone de liaison ;et on garnit des alvéoles de ladite zone de liaison d'une masse de matière plastique pour venir ancrer ledit élément complémentaire à l'intérieur de ladite âme en nid d'abeille, entre lesdites plaques de recouvrement : et selon l'invention on vient surmouler ledit élément complémentaire en matière plastique à travers l'une desdites plaques de recouvrement dans ladite zone de liaison de façon à, d'une part garnir lesdites alvéoles de ladite masse de matière plastique et d'autre part, former ledit élément complémentaire.
A: Les documents FR 2 395 823 et EP 1 369 599 décrivent des procédés d'assemblage de structures alvéolaires présentant des inconvénients similaires à ceux énoncés ci-dessus.

De la sorte, on vient à la fois couler la masse de matière plastique dans les alvéoles de la zone de liaison et aussi former l'élément complémentaire simultanément. Bien évidemment, la température de la matière plastique ramollie et coulée dans les alvéoles, diminue ensuite jusqu'à la température ambiante et la matière plastique forme alors une masse rigide en prise dans les alvéoles.

Par ailleurs, on découpe avantageusement ladite une desdites plaques de recouvrement dans ladite zone de liaison pour ménager une ouverture, et on coule ensuite ladite matière plastique à travers ladite ouverture. De la sorte, il est avantageux de pouvoir utiliser des panneaux alvéolaires standards et par conséquent d'un coût avantageux, et ensuite, de découper l'une des plaques de recouvrement là où on souhaite former la zone de liaison pour enfin couler la matière plastique ramollie.

Selon un mode de mise en oeuvre de l'invention particulièrement avantageux, on découpe au moins une ouverture longitudinale dans ladite une desdites plaques de recouvrement, selon au moins une rangée d'alvéoles de manière à pouvoir couler ensuite une masse de matière plastique longitudinale et ainsi procurer un meilleur ancrage d'un élément complémentaire lui également longitudinal. Par ailleurs, et selon une variante de réalisation de l'invention préférée, on découpe une pluralité d'ouvertures longitudinales croisées, toujours dans ladite une desdites plaques de recouvrement, permettant de former des éléments complémentaires plus complexes et adaptés à différentes fonctions que l'on détaillera ci-après. Ainsi, l'autre plaque de recouvrement opposée, est totalement intacte.

Avantageusement, on surmoule ledit élément complémentaire à l'intérieur d'un espace qui s'étend depuis l'intérieur desdites alvéoles de ladite zone de liaison jusqu'à l'extérieur dudit panneau alvéolaire dans une portion d'espace externe, ledit élément complémentaire traversant ladite une desdites plaques de recouvrement. De la sorte, l'élément complémentaire est bien constitué d'une seule pièce, et il est à la fois parfaitement ancré à l'intérieur du panneau alvéolaire grâce à la masse de matière plastique en prise dans les alvéoles, et il s'étend aussi à l'extérieur du panneau alvéolaire à travers ladite une desdites plaques de recouvrement. On notera, que la surface de l'autre plaque de recouvrement, opposée, est restée totalement intact. Préférentiellement, on forme ladite portion d'espace externe dans le prolongement de ladite ouverture, de manière à former un élément complémentaire continu qui s'étend de l'intérieur vers l'extérieur du panneau alvéolaire en définissant un plan moyen, par exemple sensiblement perpendiculaires à la plaque de recouvrement.

Selon un mode de réalisation particulier de l'invention, on ménage des portions d'espace formant rainures respectivement en regard desdites ouvertures longitudinales pour surmouler des nervures ensuite. Ces nervures sont alors parfaitement ancrées à l'intérieur du panneau alvéolaire, et elles s'étendent en saillie de ladite une desdites plaques de recouvrement. De la sorte, elles permettent de rigidifier considérablement la structure alvéolaire.

En outre, de manière préférée, on fournit un moule à injection, ledit moule à injection comprenant une empreinte de réception dudit panneau alvéolaire et à l'opposé, une empreinte dudit élément complémentaire adaptée à être appliquée contre ladite une desdites plaques de recouvrement et en regard de ladite zone de liaison. Avantageusement, le moule à injection est constitué de deux parties, une première partie maintenue en position fixe incluant ladite empreinte de réception, et une seconde partie mobile incluant ladite empreinte dudit élément complémentaire. De la sorte, lorsque le moule à injection est ouvert, que les deux parties sont dans une position espacée l'une de l'autre, on vient insérer le panneau alvéolaire dans l'empreinte de réception. Puis ensuite on rapproche les deux parties l'une vers l'autre pour venir surmouler l'élément complémentaire comme on l'expliquera à ci-après.

Selon un autre aspect, la présente invention propose une structure alvéolaire comprenant un panneau alvéolaire et un élément complémentaire solidaire dudit panneau alvéolaire, ledit panneau alvéolaire comprenant une âme en nid d'abeille, ladite âme en nid d'abeille étant prise en sandwich entre deux plaques de recouvrement, ladite âme en nid d'abeille présentant des alvéoles orientées sensiblement perpendiculairement auxdites plaques de recouvrement. Ledit panneau alvéolaire comprenant une zone de liaison pour solidariser ledit élément complémentaire audit panneau alvéolaire, les alvéoles de ladite zone de liaison étant garnies d'une masse de matière plastique permettant de venir ancrer l'élément complémentaire à l'intérieur de l'âme en nid d'abeille et entre les plaques de recouvrement. L'élément complémentaire est alors surmouler en matière plastique à travers l'une desdites plaques de recouvrement dans la zone de liaison de manière à garnir les alvéoles et à former l'élément complémentaire.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'un panneau alvéolaire usiné selon une première étape de la méthode conforme à l'invention et selon une première variante ;
- la Figure 2, est une vue schématique en coupe du panneau alvéolaire représenté sur la Figure 1 transformé selon une deuxième étape de ladite méthode ;
- la Figure 3 est une vue schématique en perspective du panneau alvéolaire transformé selon ladite deuxième étape ;
- la Figure 4 est une vue schématique partielle de dessus d'un panneau alvéolaire usiné selon une première étape de la méthode conforme à l'invention, conformément à une seconde variante ;
- la Figure 5A est une vue schématique de dessus du panneau alvéolaire transformé selon une deuxième étape dans ladite seconde variante ; et,
- la Figure 5B est une vue schématique en coupe selon le plan VB-VB illustré sur la Figure 5A.

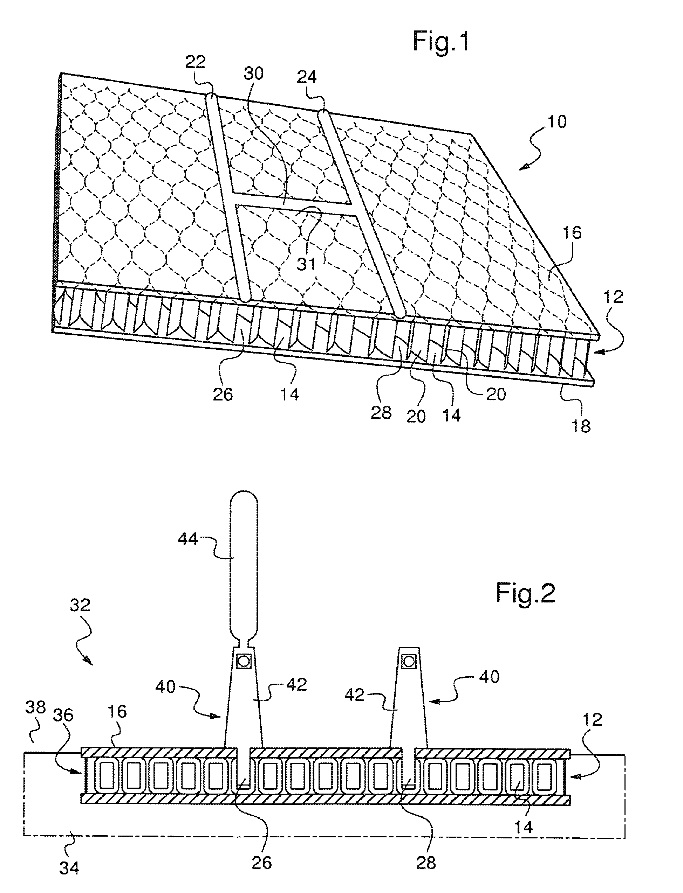

La Figure 1 illustre une portion d'un panneau alvéolaire 10 comprenant, une âme en nid d'abeille 12 formée d'alvéoles 14 et de deux plaques de recouvrement en matière plastique, l'une supérieure 16, l'autre inférieure 18. L'âme en nid d'abeille 12 comprend des bandes en matière plastique 20 d'une même largeur et ondulées selon une même période, de manière à pouvoir être assemblées successivement les unes aux autres et décalées sensiblement d'une demie période pour former les alvéoles 14. Ensuite, les deux plaques de recouvrement 16, 18 sont rapportées de chaque côté de l'âme en nid d'abeille 12 et y sont soudées par fusion locale de la tranche des bandes en matière plastique 20. Différents modes d'association des plaques de recouvrement 16, 18 et de l'âme en nid d'abeille 12 sont envisageables, l'un par exemple, met en oeuvre des ultrasons. Les alvéoles 14 présentent alors une forme moyenne cylindrique orientée sensiblement perpendiculairement aux plaques de recouvrement 16, 18

Le panneau alvéolaire 10 ainsi obtenu est relativement rigide eu égard à la quantité de matériau plastique utilisé pour le confectionner. Afin de le rigidifier plus encore, selon la méthode conforme à l'invention, on vient y rapporter des éléments complémentaires sous forme de nervures pour former une structure alvéolaire.

Pour ce faire, ont choisi tout d'abord une zone de liaison dans laquelle on ménage deux ouvertures longitudinales parallèles 22, 24 uniquement dans la plaque de recouvrement supérieure 16, respectivement au droit de deux rangées d'alvéoles 26, 28 alignées et espacées l'une de l'autre. Ces deux ouvertures longitudinales 22, 24 présentent une largeur prédéfinie, supérieur à deux fois la largeur de la tranche des bandes en matière plastique 20, et elles peuvent être réalisées par usinage, ou encore au moyen d'une lame de découpage à chaud. De la sorte, les ouvertures longitudinales débouchent dans au moins deux rangées contiguës d'alvéoles et avantageusement trois rangées.

Par ailleurs, une ouverture transversale 30 d'une largeur équivalente à la largeur des ouvertures précitées, est pratiquée entre les deux ouvertures longitudinales 22, 24 et les relie en débouchant dans une rangée transversale d'alvéoles 31.

Ensuite, selon la méthode conforme à l'invention, on vient surmouler sur ces ouvertures, des nervures formant des éléments complémentaires.

Pour cela, on fournit un moule à injection 32 représenté sur la Figure 2, comprenant deux parties opposées aptes à venir s'appliquer l'une contre l'autre pour pouvoir injecter sous pression un polymère ramolli et plus précisément dans une phase visqueuse. Une première partie 34 du moule 32 comprend une empreinte de réception 36 pour recevoir le panneau alvéolaire 10 et le maintenir en position fixe, tandis qu'à l'opposé une seconde partie 38 comprend une empreinte de nervure 40 en forme de H. Cette empreinte de nervure 40 est formée par des rainures 42 pratiquées dans cette seconde partie 38 de moule 32. Lorsque le panneau alvéolaire 10 dans lequel sont ménagées les ouvertures longitudinales 22, 24 et l'ouverture transversale 30, est engagé dans l'empreinte de réception 36, la seconde partie 38 de moule 32 est alors adaptée à être entraîné en translation pour venir s'appliquer contre la première partie 34 et contre la plaque de recouvrement supérieur 16, de façon que ces ouvertures, 22, 24, et 30 débouchent précisément dans les rainures 42 en coïncidant exactement. De la sorte, les rainures 42 de la seconde partie 38 et les rangées d'alvéoles 26, 28, 31 dans lesquelles débouchent respectivement les ouvertures 22, 24, 30 forment alors des chambres étanches communiquant entre elles. En effet, non seulement les tranches des bandes en matière plastique 20 ondulées sont soudées de manière continue et étanche à l'intérieur des plaques de recouvrement 18, 16, mais aussi, les bandes de matières plastique 20 ondulées sont soudées entre elles de manière étanche au niveau de leurs extremum respectifs.

Ensuite, par l'intermédiaire d'un canal d'injection 44 reliant l'une des rainures 42 il est injecté sous pression un polymère sous forme visqueuse à une température voisine de sa température de transition vitreuse. De la sorte, le polymère s'écoule dans toutes les chambres étanches communiquant entre elles et en particulier à l'intérieur des alvéoles 14 de chacune des rangées d'alvéoles 26, 28 et 31, par l'intermédiaire des ouvertures 22, 24, 30, ce qui permet de garnir ces alvéoles d'une masse de matière plastique qui ensuite, en refroidissant restera en prise dans ces alvéoles. Par ailleurs, grâce à la pression du matériau plastique visqueux, une partie de matière plastique s'écoule également dans les rainures 42 et vient les garnir, au même titre que les ouvertures longitudinales 22, 24 et transversale 30.

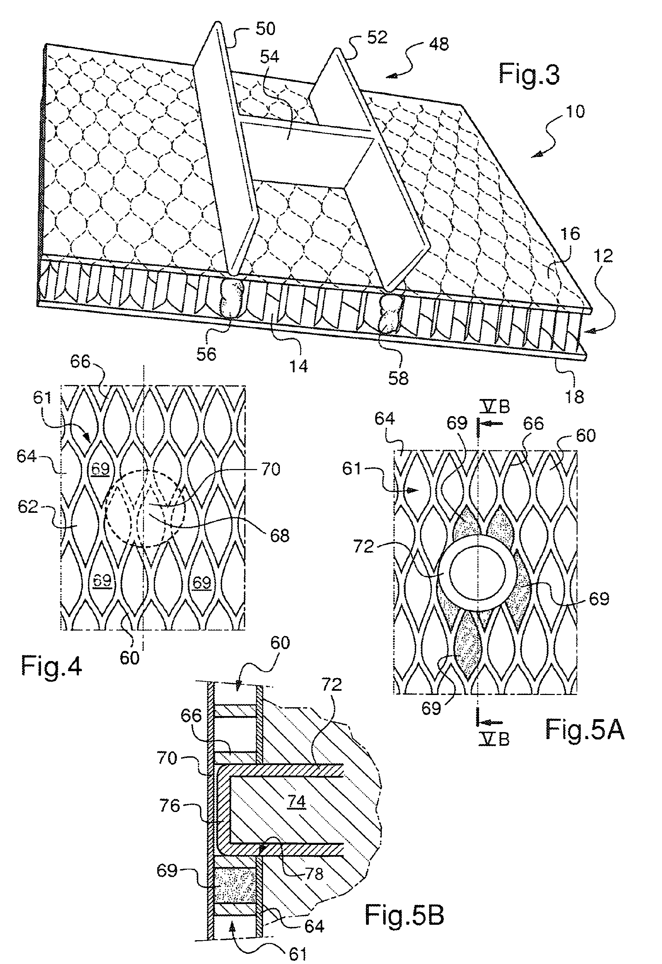

Ainsi, après refroidissement et extraction d'une structure alvéolaire 46 que l'on retrouve illustrée sur la Figure 3, il est formé une seule pièce 48 d'un même matériau sur la plaque de recouvrement supérieur 16. Cette pièce 48 comporte deux nervures longitudinales 50, 52 opposées et parallèles entre elles formant deux ailes en saillie de la plaque de recouvrement supérieur 16, et elles sont reliées par une nervure transversale 54 sensiblement perpendiculaire aux deux autres, formant une aile transversale en saillie également. Par ailleurs, ces nervures 50, 52, 54 présentent respectivement des embases constituées d'une masse de matière plastique en prise dans les alvéoles 14 et qui permet d'ancrer les ailes en saillie qui les prolongent. De la sorte, ces nervures 50, 52, 54 parfaitement solidaires du panneau alvéolaire 10, viennent le rigidifier et ne s'étendent que d'un seul côté de ce panneau à travers les ouvertures 22, 24, 30.

Outre l'adjonction de nervures qui permet de rigidifier un panneau alvéolaire, la méthode selon la présente invention permet également de surmouler des organes fonctionnels. On se référera à présent aux Figures 4, 5A et 5B pour décrire une seconde variante de la méthode de réalisation d'une structure alvéolaire conformément à l'invention, permettant précisément, d'ancrer une douille de réception dans un panneau alvéolaire.

Ainsi, sur la Figure 4 on retrouve en vue de dessus, et partiellement, un panneau alvéolaire 60 comprenant une âme en nid d'abeille 61 pourvue d'alvéoles 62 que l'on a représentées ici par transparence à travers une plaque de recouvrement 64 pour une meilleure compréhension de la description qui va suivre. Ces alvéoles 62, sont formés par des cloisons 66 analogues aux bandes en matière plastique ondulées selon la variante de réalisation précédente.

Tout d'abord, il est non seulement découpé une ouverture circulaire 68 dans la plaque de recouvrement 64, dans une zone de liaison choisie, mais aussi, les cloisons 66 sont, au droit de cette ouverture circulaire 68, découpées sur toute leur hauteur, jusqu'à une plaque de recouvrement opposée 70. Ces cloisons découpées apparaissent sur la Figure 4 en traits interrompus. Ainsi, il est ménagé à l'intérieur du panneau alvéolaire 60 un espace dont les dimensions permettent non seulement de surmouler un organe cylindrique à directrice circulaire, correspondant aux dimensions de l'ouverture circulaire 68 mais aussi, d'insérer une masse de matière plastique à l'intérieur du panneau alvéolaire 60 autour de l'organe cylindrique précité et à l'intérieur d'alvéoles 69 qui ont été ouvertes par le découpage des cloisons 66.

Pour ce faire, de manière tout à fait analogue à la variante de réalisation précédente, le panneau alvéolaire 60 est inséré dans l'empreinte d'une première partie d'un moule à injection, tandis qu'une seconde partie du moule qui vient s'appliquer sur la première partie, présente une empreinte comportant en l'espèce, un noyau cylindrique à base circulaire, centré dans un espace cylindrique de même symétrie de manière à former la douille de réception précitée. Ledit espace cylindrique présente un diamètre sensiblement équivalent au diamètre de l'ouverture circulaire 68, tandis que le diamètre du noyau cylindrique est inférieur au diamètre de l'ouverture circulaire 68. Ainsi, le noyau cylindrique s'étend en saillie de l'empreinte, de telle sorte que lorsque les deux parties de moule sont rapprochées l'une de l'autre, le noyau cylindrique s'étend à l'intérieur du panneau alvéolaire 60 de manière centrée à travers l'ouverture circulaire 68, tandis que l'empreinte de la seconde partie vient s'appliquer contre la plaque de recouvrement 64, l'espace cylindrique s'étendant dans le prolongement de l'ouverture circulaire 68. Par ailleurs, le noyau cylindrique présente une extrémité libre qui, lorsque les deux parties de moule sont rapprochées l'une de l'autre, est située à distance de la plaque de recouvrement opposé 70, de façon que la matière plastique en phase visqueuse puise s'écouler entre les deux.

De la sorte, après l'injection, la structure alvéolaire obtenue et représentée sur les Figures 5A et 5B, comporte une douille de réception 72 de symétrie cylindrique à directrice circulaire. Durant l'injection précisément, la matière plastique sous pression s'est écoulée dans l'espace cylindrique précité et autour du noyau cylindrique, dont la position correspond sur la Figure 5B, à la portion d'espace 74 située à l'intérieur de la douille de réception 72, et elle s'est aussi écoulée à l'intérieur des alvéoles ouvertes 69 sous la plaque de recouvrement 64 et entre le noyau cylindrique et l'intérieur de la plaque de recouvrement opposé 70 de manière à former un fond 76 de la douille de réception 72. De la sorte, la douille de réception 72 présente un espace de réception parfaitement calibré par le noyau cylindrique de l'empreinte de la seconde partie du moule et qui s'étend au moins partiellement à l'intérieur du panneau alvéolaire 60, et une paroi qui s'étend en saillie de la plaque de recouvrement 64 dans le prolongement d'un bord 78 de l'ouverture circulaire 68. De plus, cette douille de réception 72 est parfaitement ancrée à l'intérieur du panneau alvéolaire 60 puisque la matière plastique refroidie, forme une masse rigide en prise dans les alvéoles ouvertes 69 et entre les deux plaques de recouvrement 64, 70.

Bien évidemment, les deux variantes de réalisation précitées ne sont nullement limitatives, puisque l'on peut surmouler, selon la méthode objet de l'invention, sur l'une des faces d'un panneau alvéolaire tout organe dont les formes sont prédéfinies par les empreintes d'un moule.

## Revendications

1. Méthode de réalisation d'une structure alvéolaire comprenant un panneau alvéolaire (10 ; 60) et un élément complémentaire (48 ; 72) solidaire dudit panneau alvéolaire, ledit panneau alvéolaire comprenant une âme en nid d'abeille (12 ; 61), ladite âme en nid d'abeille étant prise en sandwich entre deux plaques de recouvrement (16,18 ; 64, 70), ladite âme en nid d'abeille présentant des alvéoles (14 ; 62) orientées sensiblement perpendiculairement auxdites plaques de recouvrement, ladite méthode étant du type selon laquelle :
- on choisi une zone de liaison dudit panneau alvéolaire (10 ; 60) pour solidariser ledit élément complémentaire (48 ; 72) audit panneau alvéolaire (10 ; 60) dans ladite zone de liaison ;
- on garnit des alvéoles de ladite zone de liaison d'une masse de matière plastique pour venir ancrer ledit élément complémentaire (48 ; 72) à l'intérieur de ladite âme en nid d'abeille (12 ; 61), entre lesdites plaques de recouvrement (16,18 ; 64, 70) ;
**caractérisée en ce qu'**on surmoule ledit élément complémentaire (48 ; 72) en matière plastique à travers l'une desdites plaques de recouvrement (16 ; 64) dans ladite zone de liaison de façon à, d'une part garnir lesdites alvéoles (14 ; 62) de ladite masse de matière plastique et d'autre part, former ledit élément complémentaire (48 ; 72).

2. Méthode selon la revendication 1, **caractérisée en ce qu'**on fournit une matière plastique thermoplastique apte à se ramollir à une température donnée, et **en ce qu'**on porte ladite matière plastique au moins à ladite température donnée pour couler ladite matière plastique à l'intérieur desdites alvéoles (14 ; 62) et surmouler ledit élément complémentaire (48 ; 72).

3. Méthode selon la revendication 2, **caractérisée en ce qu'**on découpe ladite une desdites plaques de recouvrement (16 ; 64) dans ladite zone de liaison pour ménager une ouverture (22, 24, 30 ; 68), et **en ce qu'**on coule ladite matière plastique à travers ladite ouverture.

4. Méthode selon la revendication 3, **caractérisée en ce qu'**on découpe au moins une ouverture longitudinale (22, 24, 30) dans ladite une desdites plaques de recouvrement, selon au moins une rangée d'alvéoles (26, 28, 31).

5. Méthode selon la revendication 4, **caractérisée en ce qu'**on découpe une pluralité d'ouvertures longitudinales croisées (22, 24, 30).

6. Méthode selon l'une quelconque des revendications 1 à 5, **caractérisée en ce qu'**on surmoule ledit élément complémentaire (48 ; 72) à l'intérieur d'un espace qui s'étend depuis l'intérieur desdites alvéoles de ladite zone de liaison jusqu'à l'extérieur dudit panneau alvéolaire (10 ; 60) dans une portion d'espace externe, ledit élément complémentaire traversant ladite une desdites plaques de recouvrement (16 ; 64).

7. Méthode selon la revendication 5, **caractérisée en ce qu'**on forme ladite portion d'espace externe dans le prolongement de ladite ouverture (22, 24, 30 ; 68).

8. Méthode selon la revendication 5 et 7, **caractérisée en ce qu'**on ménage des portions d'espace formant rainures respectivement en regard desdites ouvertures longitudinales pour surmouler des nervures.

9. Méthode selon l'une quelconque des revendications 1 à 8, **caractérisée en ce qu'**on fournit en outre un moule à injection (32), ledit moule à injection comprenant une empreinte de réception (36) dudit panneau alvéolaire (10) et à l'opposé, une empreinte (40) dudit élément complémentaire adaptée à être appliquée contre ladite une desdites plaques de recouvrement et en regard de ladite zone de liaison.

10. Structure alvéolaire comprenant un panneau alvéolaire (10 ; 60) et un élément complémentaire (48 ; 72) solitaire dudit panneau alvéolaire, ledit panneau alvéolaire comprenant une âme en nid d'abeille (12 ; 61), ladite âme en nid d'abeille étant prise en sandwich entre deux plaques de recouvrement (16.18 ; 64, 70), ladite âme en nid d'abeille présentant des alvéoles (14 ; 62) orientées sensiblement perpendiculairement auxdites plaques de recouvrement, ledit panneau alvéolaire (10, 60) comprenant une zone de liaison pour solidariser ledit élément complémentaire audit panneau alvéolaire, les alvéoles de ladite zone de liaison étant garnies d'une masse de matière plastique permettant de venir ancrer l'élément complémentaire (48 ; 72) à l'intérieur de l'âme en nid d'abeille et entre les plaques de recouvrement (16.18 ; 64, 70) ; **caractérisée en ce que** ledit éléments complémentaire (48 ; 72) est surmoulé en matière plastique il travers l'une lesdites plaques de recouvrement (16 ; 64) dans ladite zone de liaison de façon à, d'une part garnir lesdites alvéoles (14 ; 62) de ladite masse de matière plastique et d'autre part, former ledit élément complémentaire (48 ; 72).

## Claims

1. Method of producing a cellular structure comprising a cellular panel (10; 60) and a complementary element (48; 72) secured to the said cellular panel, the said cellular panel comprising a honeycomb core (12; 61), the said honeycomb core being sandwiched between two cover sheets (16, 18; 64, 70), the said honeycomb core having cells (14; 62) directed substantially perpendicular to the said cover sheets, the said method being of the type in which:
- a connecting region of the said cellular panel (10; 60) is chosen for securing the said complementary element (48; 72) to the said cellular panel (10; 60) in the said connecting region;
- cells of the said connecting region are lined with a mass of plastic so that the said complementary element (48; 72) can be anchored in the said honeycomb core (12; 61), between the said cover sheets (16, 18; 64, 70);
**characterized in that** the said complementary element (48; 72) made of plastic is overmoulded through one of the said cover sheets (16; 64) in the said connecting region so as, on the one hand, to line the said cells (14; 62) with the said mass of plastic and, on the other hand, to form the said complementary element (48; 72).

2. Method according to Claim 1, **characterized in that** a thermoplastic capable of softening at a given temperature is supplied and **in that** the said plastic is raised at least to the said given temperature so that the said plastic can be poured into the said cells (14; 62) and the said complementary element (48; 72) overmoulded.

3. Method according to Claim 2, **characterized in that** the said one of the said cover sheets (16; 64) is cut in the said connecting region to form an opening (22, 24, 30; 68), and **in that** the said plastic is poured in through the said opening.

4. Method according to Claim 3, **characterized in that** at least one longitudinal opening (22, 24, 30) is cut in the said one of the said cover sheets, along at least one row of cells (26, 28, 31).

5. Method according to Claim 4, **characterized in that** a plurality of intersecting longitudinal openings (22, 24, 30) is cut.

6. Method according to any one of Claims 1 to 5, **characterized in that** the said complementary element (48; 72) is overmoulded inside a space extending from inside the said cells of the said connecting region as far as outside the said cellular panel (10; 60) in a portion of external space, the said complementary element passing through the said one of the said cover sheets (16; 64).

7. Method according to Claim 5, **characterized in that** the said portion of external space is formed in the continuation of the said opening (22, 24, 30; 68).

8. Method according to Claims 5 and 7, **characterized in that** portions of space forming grooves are formed respectively facing the said longitudinal openings, in order to overmould ribs.

9. Method according of any one of Claims 1 to 8, **characterized in that** injection mould (32) is also provided, the said injection mould comprising a mould cavity (36) for accommodating the said cellular panel (10) and, opposite that, a mould cavity (40) for moulding the said complementary element and designed to be pressed against the said one of the said cover sheets and facing the said connecting region.

10. Cellular structure comprising a cellular panel (10; 60) and a complementary element (48; 72) secured to the said cellular panel, the said cellular panel comprising a honeycomb core (12; 61), the said honeycomb core being sandwiched between two cover sheets (16, 18; 64, 70), the said honeycomb core having cells (14; 62) directed substantially perpendicular to the said cover sheets, the said cellular panel (10, 60) comprising a connecting region for securing the said complementary element to the said cellular panel, the cells of the said connecting region being lined with a mass of plastic for anchoring the complementary element (48; 72) in the honeycomb core and between the cover sheets (16, 18; 64, 70); **characterized in that** the said complementary element (48; 72) is overmoulded in plastic through one of the said cover sheets (16; 64) in the said connecting region so as, on the one hand, to line the said cells (14; 62) with the said mass of plastic and, on the other hand, to form the said complementary element (48; 72).

## Patentansprüche

1. Verfahren zum Herstellen einer Wabenstruktur, die eine Wabentafel (10; 60) und ein mit der Wabentafel fest verbundenes komplementäres Element (48; 72) umfasst, wobei die Wabentafel einen Wabenformkern (12; 61) umfasst, wobei der Wabenformkern zwischen zwei Abdeckplatten (16, 18; 64, 70) eingebettet ist, wobei der Wabenformkern Waben (14; 62) aufweist, die im Wesentlichen senkrecht zu den Abdeckplatten orientiert sind, wobei das Verfahren von dem Typ ist, bei dem:
- eine Verbindungszone der Wabentafel (10; 16) für die Befestigung des komplementären Elements (48; 72) an der Wabentafel (10; 60) in der Verbindungszone gewählt wird; und
- die Waben der Verbindungszone mit einer Kunststoffmasse gefüllt werden, um das komplementäre Element (48; 72) in dem Wabenformkern (12; 61) zwischen den Abdeckplatten (16, 18; 64, 70) zu verankern;
**dadurch gekennzeichnet, dass** das komplementäre Element (48; 72) durch eine der Abdeckplatten (16; 64) in der Verbindungszone mit Kunststoff überformt wird, derart, dass einerseits die Waben (14; 62) mit der Kunststoffmasse gefüllt werden und andererseits das komplementäre Element (48; 72) gebildet wird.

2. Verfahren nach Anspruch 1, **dadurch gekennzeichnet, dass** ein thermoplastischer Kunststoff zugeführt wird, der bei einer gegebenen Temperatur erweicht, und dass der Kunststoff wenigstens auf der gegebenen Temperatur gehalten wird, um den Kunststoff in die Waben (14; 62) zu gießen und das komplementäre Element (48; 72) zu überformen.

3. Verfahren nach Anspruch 2, **dadurch gekennzeichnet, dass** eine der Abdeckplatten (16; 64) in der Verbindungszone ausgeschnitten wird, um eine Öffnung (22, 24, 30; 68) auszubilden, und dass der Kunststoff durch die Öffnung gegossen wird.

4. Verfahren nach Anspruch 3, **dadurch gekennzeichnet, dass** wenigstens eine longitudinale Öffnung (22, 24, 30) in einer der Abdeckplatten wenigstens längs einer Wabenreihe (26, 28, 31) ausgeschnitten wird.

5. Verfahren nach Anspruch 4, **dadurch gekennzeichnet, dass** mehrere gekreuzte longitudinale Öffnungen (22, 24, 30) ausgeschnitten werden.

6. Verfahren nach einem der Ansprüche 1 bis 5, **dadurch gekennzeichnet, dass** das komplementäre Element (48; 72) in einem Raum überformt wird, der sich von dem Innenraum der Waben der Verbindungszone bis in die äußere Umgebung der Wabentafel (10; 60) in einem äußeren Raumabschnitt erstreckt, wobei das komplementäre Element durch eine der Abdeckplatten (16; 64) verläuft.

7. Verfahren nach Anspruch 5, **dadurch gekennzeichnet, dass** der äußere Raumabschnitt in der Verlängerung der Öffnung (22, 24, 30; 68) gebildet wird.

8. Verfahren nach Anspruch 5 und 7, **dadurch gekennzeichnet, dass** Raumabschnitte, die Rillen bilden, gegenüber den longitudinalen Öffnungen ausgebildet werden, um Stege zu überformen.

9. Verfahren nach einem der Ansprüche 1 bis 8, **dadurch gekennzeichnet, dass** außerdem eine Einspritzform (32) bereitgestellt wird, wobei die Einspritzform einen Formhohlraum (36) für die Aufnahme der Wabentafel (10) und gegenüber einen Formhohlraum (40) für das komplementäre Element, der dazu ausgelegt ist, gegen eine der Abdeckplatten und gegenüber der Verbindungszone angebracht zu werden, umfasst.

10. Wabenstruktur, mit einer Wabentafel (10; 60) und einem komplementären Element (48; 72), das mit der Wabentafel fest verbunden ist, wobei die Wabentafel einen Wabenformkern (12; 61) umfasst, wobei der Wabenformkern zwischen zwei Abdeckplatten (16, 18; 64, 70) eingebettet ist, wobei der Wabenformkern Waben (14; 62) aufweist, die im Wesentlichen senkrecht zu den Abdeckplatten orientiert sind, wobei die Wabentafel (10, 60) eine Verbindungszone aufweist, um das komplementäre Element an der Wabentafel zu befestigen, wobei die Waben der Verbindungszone mit einer Kunststoffmasse gefüllt sind, die ermöglicht, das komplementäre Element (48; 72) im Innenraum des Wabenformkerns und zwischen den Abdeckplatten (16, 18; 64, 70) zu verankern; **dadurch gekennzeichnet, dass** das komplementäre Element (48; 72) mit Kunststoff durch eine der Abdeckplatten (16; 64) in der Verbindungszone überformt ist, derart, dass einerseits die Waben (14; 62) mit der Kunststoffmasse gefüllt sind und andererseits das komplementäre Element (48; 72) gebildet ist.
